# EUROPÄISCHE PATENTSCHRIFT

(11) **EP 2 043 234 B1**
(45) Veröffentlichungstag und Bekanntmachung des Hinweises auf die Patenterteilung: **12.05.2010**
(21) Anmeldenummer: 07117242.3
(22) Anmeldetag: 26.09.2007
(51) Int. Cl.: H02K 11/00, H01R 9/24, H02K 5/22, H05K 7/14, H05K 5/06

(54) **Elektromotor**
Electric motor
Moteur électrique

(43) Veröffentlichungstag der Anmeldung: 01.04.2009
(73) Patentinhaber: ebm-papst Mulfingen GmbH & Co. KG, 74673 Mulfingen (DE)
(72) Erfinder: Best, Dieter, 74653 Ingelfingen (DE); Sturm, Michael, 97980 Bad Mergentheim-Rot (DE)
(74) Vertreter: Patentanwälte Dr. Solf & Zapf

(56) Entgegenhaltungen:
- EP-A- 1 059 723
- EP-A- 1 104 080
- EP-A- 1 237 260
- DE-A1- 10 332 392
- DE-A1-102005 015 318

## Beschreibung

Die vorliegende Erfindung betrifft einen Elektromotor mit einem Stator mit einer Verschaltungseinrichtung für Statorwicklungen, mit einer in einem Elektronikgehäuse angeordneten Steuerelektronik und einer im Bereich des Elektronikgehäuses angeordneten Anschlusseinrichtung für äußere Anschlussleitungen.

Ferner betrifft die Erfindung auch bestimmte, erfindungswesentliche Einzelkomponenten (als "Ersatz- bzw. Zubehörteile") des Elektromotors.

Ein derartiger Elektromotor ist beispielsweise in der DE 103 13 274 A1 bzw. der korrespondierenden EP 1 419 568 B1 beschrieben. Es handelt sich dabei speziell um einen Motor mit einem im Wesentlichen geschlossenen bzw. gekapselten Motorgehäuse hoher IP-Schutzart nach DIN/IEC EN 60034-Teil 5, bestehend aus einem Stator und einem den Stator von einer Seite her als Teil eines Motorgehäuses topfartig umschließenden Außenläufer sowie einem sich als weiterer Teil des Motorgehäuses auf der dem Außenläufer axial gegenüberliegenden Seite anschließenden, eine Steuerelektronik enthaltenden Elektronikgehäuse. Das Motorgehäuse ist im Wesentlichen geschlossen bzw. gekapselt ausgeführt, abgesehen von einem für die Rotation notwendigen Ringspalt zwischen dem Außenläufer und dem angrenzenden Gehäusebereich, wobei dieser Ringspalt über eine Rotationsdichtung, üblicherweise in Form einer Labyrinthdichtung, gegen Eindringen von Feuchtigkeit und von sonstigen Fremdstoffen abgedichtet ist. Bei dem bekannten Motor weist das Elektronikgehäuse eine Öffnung zum elektrischen Anschluss auf, wobei diese Öffnung mit einem mit äußeren Anschlussleitungen verbundenen Anschlusssteckverbinder dicht verschließbar ist. Innerhalb des Elektronikgehäuses sind als Anschlusseinrichtung entsprechende Gegenkontakte im Bereich der Gehäuseöffnung angeordnet. Über die Art der inneren elektrischen Verbindungen zwischen den Gegenkontakten der Anschlusseinrichtung und der Steuerelektronik sowie zwischen der Steuerelektronik und dem Stator bzw. dessen Verschaltungseinrichtung ist in den genannten Veröffentlichungen nichts offenbart.

Allerdings war es bei solchen bekannten Motoren bisher stets so, dass für alle inneren Verbindungen fest angeschlossene, insbesondere verlötete Leitungen vorgesehen waren.

Dazu wird ergänzend auch auf die in der EP 1 419 586 B1 genannte und inhaltlich gewürdigte Veröffentlichung: Firmenprospekt Ziehl-Abegg "Der intelligente Antrieb", EC-Flyer p65-01/99 verwiesen. Bei dem darin abgebildeten EC-Motor sind die besagten inneren Leitungsverbindungen deutlich erkennbar.

Obwohl solche Motoren einer hohen IP-Schutzart entsprechen, kann dennoch unter ungünstigen Betriebsbedingungen Feuchtigkeit oder sogar Nässe in das Motorgehäuse eindringen, und zwar vor allem durch den unvermeidbaren Ringspalt zwischen dem Außenläufer und dem angrenzenden Gehäusebereich. Eine hier einmal eingetretene Nässe kann sich innerhalb des Motors ausbreiten und zu Schäden führen. Zur Erhöhung der Sicherheit und der Flexibilität von Umrichtermotoren schlagen daher Dokumente, wie z.B. EP 1237260 und EP 1059723, die Verwendung von Steckverbindung vor.

Der vorliegenden Erfindung liegt die Aufgabe zu Grunde, einen Elektromotor der genannten Art zu schaffen, der eine vereinfachte Herstellung und Montage ermöglicht und insbesondere auch einen weiter verbesserten Schutz gegen Feuchtigkeit gewährleistet. Diese Aufgabe wird durch die Merkmale des Anspruchs 1 gelöst. Vorteilhafte Ausgestaltungen sind Gegenstand der auf diese rückbezogenen Unteransprüche.

Erfindungsgemäß ist dazu vorgesehen, dass alle inneren elektrischen Verbindungen zwischen der Anschlusseinrichtung und der Steuerelektronik und/oder zwischen der Steuerelektronik und der Stator-Verschaltungsanordnung konsequent als Steckverbindungen ausgebildet sind, die bezüglich ihrer Steck- und Löserichtung vorzugsweise entsprechend einer Motorachse bzw. dazu achsparallel ausgerichtet sind. Diese erfindungsgemäße Ausgestaltung vereinfacht gravierend die Montage des Motors, indem die Komponenten zur elektrischen Verbindung lediglich zusammengesteckt zu werden brauchen. Zusätzlich wird der Vorteil erreicht, dass sogar in einem montierten Zustand des Motors, d. h. wenn er an einem Einsatzort über seinen Statorflansch ortsfest eingebaut ist, ein schnelles Öffnen des Gehäuses durch einfaches Abziehen des Elektronikgehäuses mit der Steuerelektronik möglich ist (nach Lösen von Verschraubungen zwischen Elektronikgehäuse und Statorflansch). Dadurch kann die Elektronik einfach und schnell demontiert und auch - beispielsweise zum Zwecke einer Instandsetzung - ausgetauscht werden.

In weiterer vorteilhafter Ausgestaltung der Erfindung ist einerseits vorgesehen, dass die Steckverbindungen zwischen der Anschlusseinrichtung und der Steuerelektronik eine Wandung des Elektronikgehäuses abgedichtet durchgreifen. Andererseits durchgreifen auch die Steckverbindungen zwischen der Steuerelektronik und der Stator-Verschaltungsanordnung abgedichtet eine Trennwand des Statorflansches. Durch diese inneren Abdichtungen wird effektiv vermieden, dass im Falle eines Eindringens von Feuchtigkeit an irgendeiner Stelle des Motors, insbesondere über den Ringspalt im Bereich zwischen Rotor und Gehäuse, sich diese Feuchtigkeit weiter innerhalb des Motors verbreiten kann, weil innerhalb des Motors praktisch Schottwände gebildet sind, durch die Kontaktteile der erfindungsgemäßen Steckverbindungen jeweils abgedichtet hindurchgeführt sind.

Ein weiterer wesentlicher Aspekt der Erfindung ist, dass die Anschlusseinrichtung einen Zwischenträger aufweist, der Anschlusskontakte für die äußeren Anschlussleitungen sowie Kontaktelemente der Steckverbindungen zur Steuerelektronik hin trägt, wobei der Zwischenträger im Bereich von Kontakt-Durchführöffnungen der Wandung des Elektronikgehäuses Dichtungen zur dichtenden Anlage an der Wandung in die Durchführöffnungen umschließenden Bereichen aufweist. In vorteilhafter Ausgestaltung ist hierbei der Zwischenträger kastenförmig mit einer die Kontaktelemente und die Dichtungen aufweisenden Unterseite und einer gegenüberliegenden Öffnung mit einem umlaufenden Öffnungsrand ausgebildet und hierbei von außen her in eine angepasste Aufnahme des Elektronikgehäuses eingesetzt. Somit bildet der Zwischenträger eine Art Anschlusskasten, dessen Öffnung mit einem äußeren Deckel verschließbar ist. Dieser Deckel verschließt gleichzeitig auch die Aufnahme des Elektronikgehäuses, indem er den gesamten Bereich des Zwischenträgers übergreift und in äußeren Haltebereichen direkt mit dem Elektronikgehäuse verschraubt wird. Vorzugsweise liegt der Deckel dann im Wesentlichen bündig in der Außenkontur des Elektronikgehäuses, und zwar insbesondere in einer zur Motorachse senkrechten Gehäuse-Stirnwandung.

In weiterer vorteilhafter Ausgestaltung kann die Anschlusseinrichtung bzw. der Zwischenträger modulare, optional montierbare Anschlussmodule aufweisen. Diese Anschlussmodule können als Leistungsmodul zum Anschluss von Spannungsversorgungsleitungen, als Steuermodul zum Anschluss von externen Steuerleitungen und/oder als Relaismodul insbesondere mit Sicherheitsschaltfunktionen ausgebildet sein.

Weitere Ausgestaltungen und besondere Aspekte der Erfindung werden noch genauer in der anschließenden Beschreibung erläutert werden.

Anhand eines in der Zeichnung veranschaulichten, bevorzugten Ausführungsbeispiels eines erfindungsgemäßen Motors soll die Erfindung genauer erläutert werden. Dabei zeigen:
- Fig. 1: eine perspektivische Explosionsdarstellung eines erfindungsgemäßen Motors, allerdings ohne Außenläufer,
- Fig. 2: eine Perspektivansicht des montierten Motors gemäß Fig. 1 mit Außenläufer, aber ohne einen oberen Deckel im Anschlussbereich,
- Fig. 3: eine weitere Perspektivansicht ähnlich Fig. 2 mit Teil-Explosionsdarstellung von wesentlichen Bestandteilen einer Anschlusseinrichtung,
- Fig. 4: eine perspektivische Schnittansicht einer Elektronikbaugruppe in einer zur Motorachse parallelen Schnittebene IV-IV gemäß Fig. 2,
- Fig. 5: eine weitere Schnittansicht ähnlich Fig. 4, jedoch in der Schnittebene V-V gemäß Fig. 2,
- Fig. 6: eine perspektivische Explosionsdarstellung von Bestandteilen der Anschlusseinrichtung,
- Fig. 7: die zusammengesetzten Teile gemäß Fig. 6 in einer Perspektivansicht auf eine Unterseite und
- Fig. 8: eine Ausschnitt-Perspektivansicht auf einen Verbindungsbereich des Stators bzw. seiner Verschaltungseinrichtung in einem noch nicht zusammengesetzten Zustand.

In den verschiedenen Figuren der Zeichnung sind gleiche Teile stets mit den gleichen Bezugszeichen versehen. Deshalb gilt jede Beschreibung eines Teils unter Bezugnahme auf eine bestimmte Zeichnungsfigur auch für andere Figuren, in denen das Teil mit dem entsprechenden Bezugszeichen ebenfalls zu erkennen ist.

Ein erfindungsgemäßer Elektromotor 1 ist in der dargestellten Ausführungsform als kollektorloser, elektronisch kommutierter und insbesondere mit Netzspannung betriebener Gleichstrom-Außenläufermotor ausgebildet. Der Elektromotor 1 weist ein gekapseltes Motorgehäuse 2 derart auf, dass er einer hohen IP-Schutzart nach IEC 60034-5 genügt, beispielsweise IP 54.

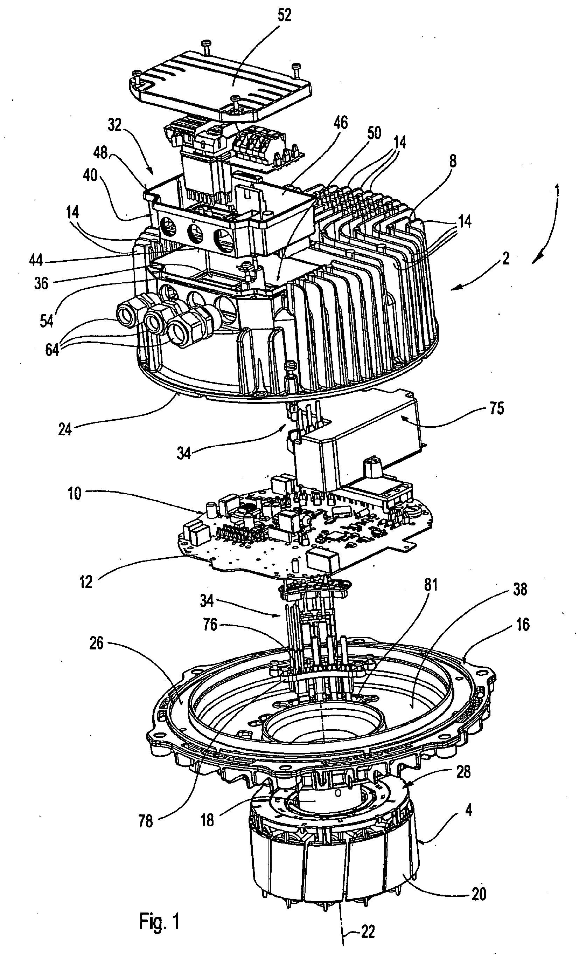

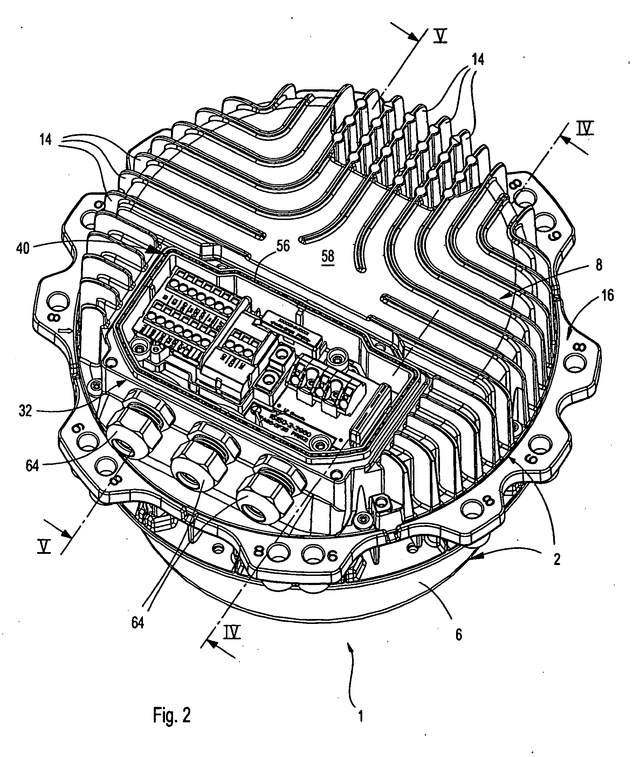

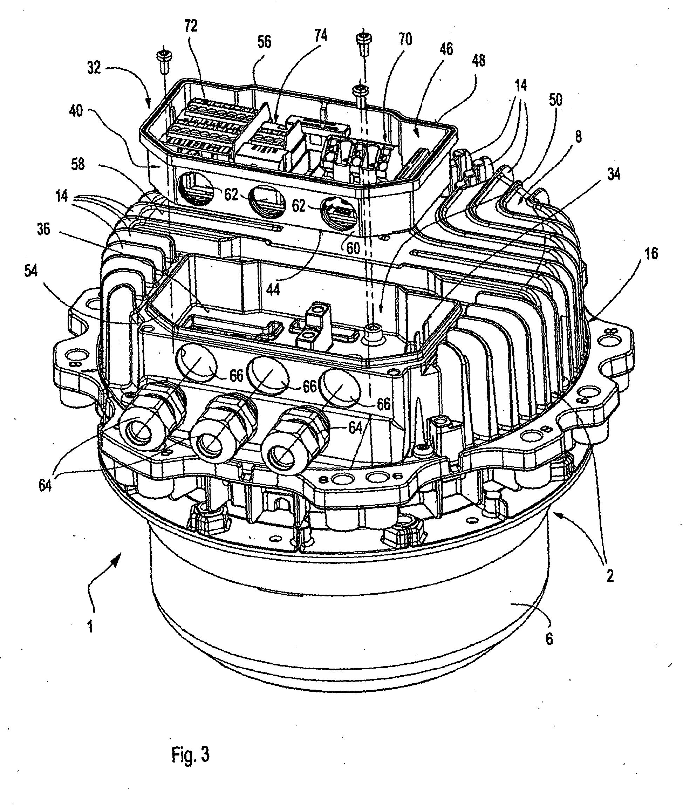

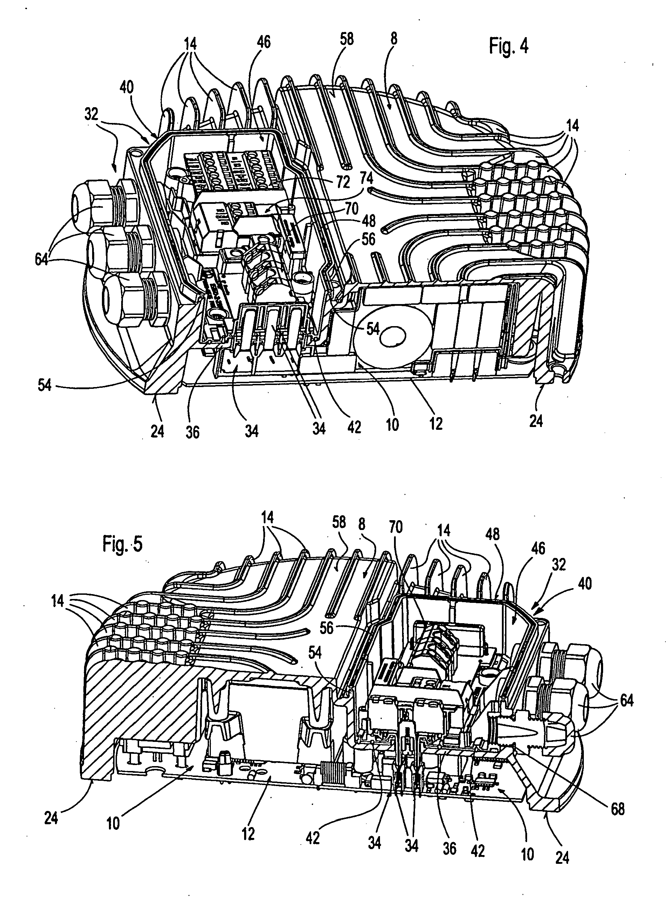

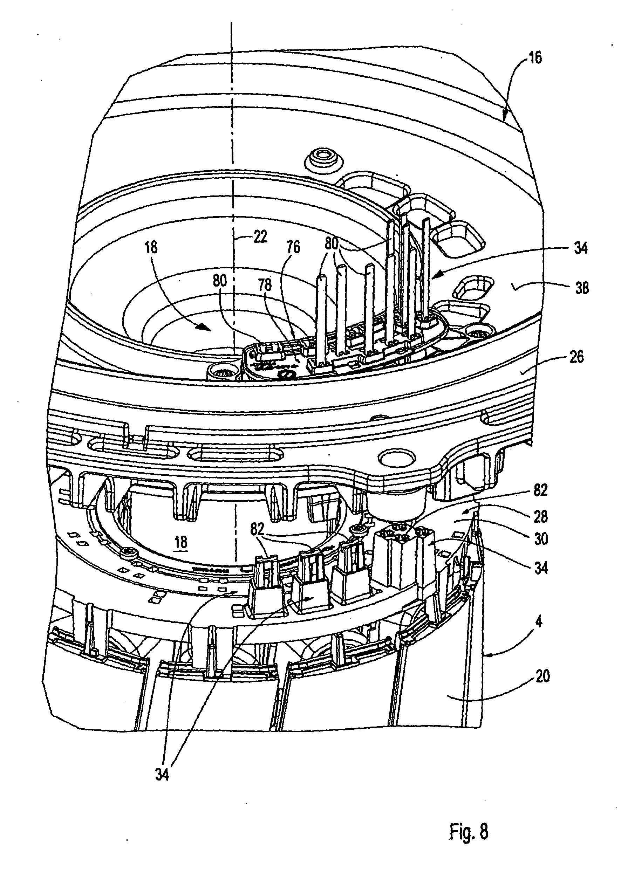

Wie sich aus Fig. 1 bis 3 ergibt, besteht der Elektromotor 1 aus einem Stator 4 (s. dazu auch Fig. 8) und einem den Stator 4 von einer Seite her als Teil des Motorgehäuses 2 topfartig umschließenden Außenläufer 6. Dieser Außenläufer 6 ist nur in Fig. 2 und 3 dargestellt, nicht aber in Fig. 1 und 8. Auf der dem Außenläufer 6 axial gegenüberliegenden Seite des Stators 4 schließt sich als weiterer Teil des Motorgehäuses 2 ein Elektronikgehäuse 8 an, in dem eine für den Betrieb des Elektromotors 1 erforderliche Steuerelektronik 10 untergebracht ist. Diese Steuerelektronik 10 ist im Wesentlichen auf einer Leiterplatte 12 angeordnet (Fig. 1). Das Elektronikgehäuse 8 ist topfförmig ausgebildet, um die Steuerelektronik 10 aufzunehmen. Dabei besteht das Elektronikgehäuse 8 aus einem gut wärmeleitfähigen Material, insbesondere Metall und bildet dadurch gleichzeitig auch einen Kühlkörper für solche Bauteile der Steuerelektronik 10, die im Betrieb Wärme erzeugen. Diese Bauteile liegen innen in gut wärmeleitendem Kontakt an dem Elektronikgehäuse 8 an (s. dazu Fig. 4 und 5). Zudem weist das Elektronikgehäuse 8 äußere Kühlrippen 14 auf. Die Steuerelektronik 10 bildet zusammen mit ihrem Elektronikgehäuse eine gemeinsame Baugruppe (Elektronik-Baugruppe) des Motors 1.

Als tragendes Teil weist der Elektromotor 1 weiterhin einen Statorflansch 16 auf, der vorzugsweise einstückig mit einem Lagertragrohr 18 ausgebildet ist. Der Stator 4 besteht aus einem Blechpaket 20 mit nicht näher bezeichneten Statorwicklungen, wobei der Stator 4 mit seinem Blechpaket 20 auf das Lagertragrohr 18 aufgepresst ist. Das Lagertragrohr 18 enthält dabei nicht dargestellte Rotationslager für eine ebenfalls nicht erkennbare Welle des Außenläufers 6. Der Außenläufer 6 ist dadurch um eine Motorachse 22 drehbar gelagert. Somit ist der Stator 4 über das Lagertragrohr 18 an dem Statorflansch 16 befestigt.

Ferner wird auch das Elektronikgehäuse 8 mit einem umlaufenden Öffnungsrand 24 an dem Statorflansch 16 befestigt, wobei zwischen dem Öffnungsrand 24 und einer umlaufenden, vorzugsweise nutartigen Dichtfläche 26 des Statorflansches 16 eine in der Zeichnung nicht dargestellte Dichtung angeordnet wird. Hierdurch wird die Steuerelektronik 10 zwischen dem Statorflansch 16 und dem Elektronikgehäuse 8 dicht gekapselt.

Ein zwischen dem rotierenden Außenläufer 6 und dem - ebenfalls einen Teil des Motorgehäuses 2 bildenden - Statorflansch 16 gebildeter, in der Zeichnung nicht erkennbarer Spalt ist über eine geeignete Rotationsdichtung, die insbesondere als Labyrinthdichtung ausgeführt ist, gegen Eindringen von Feuchtigkeit oder sonstigen Fremdstoffen von außen abgedichtet.

Der Stator 4 weist eine Verschaltungseinrichtung 28 für seine Statorwicklungen auf (s. Fig. 1 und 8), wobei diese Verschaltungseinrichtung 28 aus einer im Bereich eines stirnseitigen Wickelkopfes des Stators 4 angeordneten, den Wickelkopf überdeckenden Schaltscheibe 30 besteht, die zum elektrischen Verschalten der Statorwicklungen und zum elektrischen Verbinden mit der Steuerelektronik 10 dient. Zudem trägt die Schaltscheibe 30 vorzugsweise mindestens einen so genannten Temperaturwächter (in der Zeichnung nicht erkennbar), der z. B. durch ein NTC-Element gebildet sein kann.

Im Bereich des Elektronikgehäuses 8 ist zudem eine Anschlusseinrichtung 32 für nicht dargestellte äußere Anschlussleitungen vorgesehen.

Innerhalb des Elektromotors 1 muss nun einerseits die Anschlusseinrichtung 32 elektrisch mit der Steuerelektronik 10 verbunden werden, und andererseits muss auch die Steuerelektronik 10 mit dem Stator 4 bzw. seiner Verschaltungseinrichtung 28 elektrisch verbunden werden.

Erfindungsgemäß ist nun vorgesehen, dass alle elektrischen Verbindungen zwischen der Anschlusseinrichtung 32 und der Steuerelektronik 10, zusätzlich oder alternativ auch alle elektrischen Verbindungen zwischen der Steuerelektronik 10 und der Stator-Verschaltungseinrichtung 28 als Steckverbindungen 34 ausgebildet sind. Vorzugsweise sind alle Steckverbindungen 34 bezüglich ihrer Steck- und Löserichtung entsprechend der Motorachse 22 bzw. dazu achsparallel ausgerichtet. Dadurch brauchen alle Komponenten zur elektrischen Verbindung lediglich in axialer Richtung zusammengesteckt zu werden.

Wie sich insbesondere aus Fig. 4 und 5 ergibt, ist bezüglich der Verbindungen zwischen der Anschlusseinrichtung 32 und der Steuerelektronik 10 vorgesehen, dass die Steckverbindungen 34 eine Wandung 36 des Elektronikgehäuses 8 abgedichtet durchgreifen. Entsprechend ist auch bezüglich der Verbindungen zwischen der Steuerelektronik 10 und der Stator-Verschaltungseinrichtung 28 vorgesehen, dass die zugehörigen Steckverbindungen 34 eine Trennwand 38 des Statorflansches 16 abgedichtet durchgreifen. Dazu wird insbesondere auf Fig. 1 und 8 verwiesen.

In einem besonderen Aspekt der Erfindung weist die Anschlusseinrichtung 32 einen Zwischenträger 40 auf, der einerseits nicht näher bezeichnete Anschlusskontakte für die äußeren Anschlussleitungen sowie andererseits ebenfalls nicht gesondert bezeichnete Kontaktelemente der Steckverbindungen 34 zur Steuerelektronik 10 hin trägt. Dabei weist der Zwischenträger 40 im Bereich von Kontakt-Durchführöffnungen der Wandung 36 des Elektronikgehäuses 8 (s. Fig. 4 und 5) Dichtungen 42 auf, die jeweils - in die Durchführöffnungen umschließenden Bereichen - zur dichtenden Anlage an der Wandung 36 gelangen. Auf diese Weise sind die Durchführungen der Steckverbindungen 34 abgedichtet.

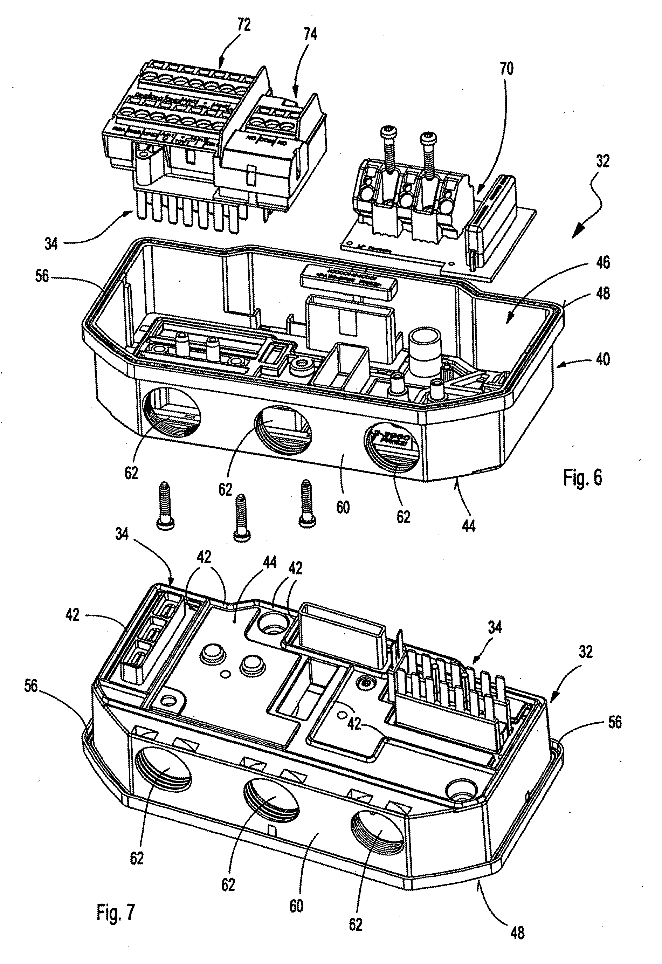

In bevorzugter Ausgestaltung ist der Zwischenträger 40 kastenförmig bzw. wannenförmig mit einer die Kontaktelemente und die Dichtungen 42 aufweisenden Unterseite 44 und einer gegenüberliegenden Öffnung 46 mit einem umlaufenden Öffnungsrand 48 ausgebildet. Dazu wird insbesondere auf die gesonderten Darstellungen in Fig. 6 und 7 verwiesen. Gemäß Fig. 1 bis 5 wird dieser kastenförmige Zwischenträger 40 von außen her in eine an seine Form und Größe angepasste Aufnahme 50 des Elektronikgehäuses 8 eingesetzt. Die Aufnahme 50 des Elektronikgehäuses 8 ist gemäß Fig. 1 mit einem äußeren Deckel 52 verschließbar. Dabei ist bevorzugt vorgesehen, dass der Zwischenträger 40 im Bereich seines Öffnungsrandes 48 nach außen umgewinkelt ist und mit diesem umgewinkelten Öffnungsrand 48 einen die Aufnahme 50 des Elektronikgehäuses 8 umschließenden Dichtsteg 54 übergreift, wie dies am besten in Fig. 4 und 5 zu erkennen ist. Dabei ist im Bereich des Öffnungsrandes 48 eine umlaufende Dichtung 56 derart angeordnet, dass der Deckel 52 einerseits den Zwischenträger 40 und andererseits auch die Aufnahme 50 des Elektronikgehäuses 8 nach außen dicht verschließt, indem die Dichtung 56 des Zwischenträgers 40 dichtend zwischen dem Deckel 52 und dem Dichtsteg 54 des Elektronikgehäuses 8 liegt. Dazu übergreift der Deckel 52 den ganzen Zwischenträger 40 und wird in äußeren Haltebereichen direkt mit dem Elektronikgehäuse 8 verschraubt. Vorzugsweise liegt der Deckel 52 dann im Wesentlichen bündig in der Außenkontur des Elektronikgehäuses 8, und zwar in einer zur Motorachse 22 senkrechten Gehäuse-Stirnwandung 58.

Es ist hierbei besonders vorteilhaft, wenn der Zwischenträger 40 und vorzugsweise auch der Deckel 52 jeweils aus einem elektrisch isolierenden Kunststoff bestehen. Dadurch ist im Bereich der Anschlusseinrichtung 32 und aller spannungsführenden Kontakte eine gute elektrische Isolation gegenüber dem aus Metall bestehenden Elektronikgehäuse 8 gewährleistet. In weiterer bevorzugter Ausgestaltung ist hierbei der Zwischenträger 40 als Zweikomponenten-Formteil ausgebildet, wobei er aus einem ersten, formstabilen Material besteht und die Dichtungen 42 und 56 mit linienförmigen Verlauf aus einem zweiten, elastischeren Material stoffschlüssig angeformt sind.

Der wannenförmige Zwischenträger 40 weist in einer Seitenwand 60 bevorzugt mehrere, wie dargestellt beispielsweise drei Öffnungen 62 zum Einführen der nicht dargestellten Anschlussleitungen auf. Dazu wird auf Fig. 6 und 7 verwiesen. Jede Öffnung 62 ist als Gewindeloch ausgebildet und dient zum Einschrauben einer Dichtverschraubung 64 (s. Fig. 1 bis 5), wie sie für abgedichtete Kabeldurchführungen üblich ist. Auch das Elektronikgehäuse 8 weist in einer Seitenwand für jede Öffnung 62 des Zwischenträgers 40 eine zugehörige, fluchtende Durchführöffnung 66 auf, in deren Bereich die zugehörige Dichtverschraubung 64 über eine Dichtung 68 nach außen abgedichtet ist. Dazu wird insbesondere auf den Schnitt in Fig. 5 verwiesen.

Gemäß einem weiteren Erfindungsaspekt kann die Anschlusseinrichtung 32 bzw. der Zwischenträger 40 modulare, optional montierbare Anschlussmodule aufweisen. Wie sich aus Fig. 3 bis 6 ergibt, kann es sich um Ausführungen als Leistungsmodul 70 zum Anschluss von Spannungsversorgungsleitungen, Steuermodul 72 zum Anschluss von externen Steuerleitungen und/oder als Relaismodul 74 insbesondere mit bestimmten Sicherheitsschaltfunktionen handeln. Diese Module weisen einerseits die erforderlichen Kontaktelemente zum Anschluss der Leitungen und andererseits auch die notwendigen Steckkontaktelemente für die Steckverbindungen 34 auf.

In weiterer bevorzugter Ausgestaltung ist gemäß Fig. 1 zwischen der Anschlusseinrichtung 32, und zwar insbesondere deren Leistungsmodul 70, und der Steuerelektronik 10 eine separate Entstör-Baugruppe 75 vorgesehen, die ebenfalls beidseitig über Steckverbindungen 34 elektrisch angeschlossen ist. Somit ist die Anschlusseinrichtung 32 mit der Steuerelektronik 10 teilweise mittelbar über die Entstör-Baugruppe 75 verbunden. Diese Baugruppe 75 enthält übliche elektrische Entstör- bzw. Filterbauteile. Durch die Ausbildung als gesonderte Baugruppe erübrigt sich eine Anordnung dieser Bauteile auf der Leiterplatte 12 der Steuerelektronik 10.

Was nun die Verbindungen zwischen der Steuerelektronik 10 und der Stator-Verschaltungseinrichtung 28 betrifft, so ist für diese elektrischen Steckverbindungen 34 gemäß Fig. 1 und 8 ein Adapterstecker 76 vorgesehen. Dieser Adapterstecker 76 besteht aus einem flanschartigen Trägerteil 78 mit darin gehalterten Steckkontaktelementen 80, wobei die Kontaktelemente 80 eine Öffnung 81 der Trennwand 38 des Statorflansches 16 durchgreifen (s. insbesondere Fig. 1), und wobei das Trägerteil 78 die Öffnung 81 überdeckt und über eine umlaufende, die Öffnung 81 umschließende, in der Zeichnung allerdings nicht erkennbare Dichtung an der Trennwand 38 anliegt. Das Trägerteil 78 wird auf der Trennwand 38 befestigt, insbesondere verschraubt. Auf diese Weise sind auch diese Durchführungen derart abgedichtet, dass die beiden über die Trennwand 38 benachbarten Räume dicht voneinander getrennt sind.

Ähnlich wie der Zwischenträger 40 besteht vorzugsweise auch das Trägerteil 78 aus einem elektrisch isolierenden Kunststoff insbesondere in einer Ausgestaltung als Zweikomponenten-Formteil, wobei die Dichtung aus einem elastischen Material mit linienförmigem Verlauf stoffschlüssig angeformt ist.

Wie weiterhin noch aus Fig. 8 erkennbar ist, trägt die Schaltscheibe 30 zum Steckanschluss des Adaptersteckers 76 entsprechend ausgebildete, korrespondierende Kontaktelemente 82.

Abschließend sei nochmals erwähnt, dass zusätzlich zu dem gesamten Elektromotor 1 auch Schutz beansprucht wird für die wesentlichen Bestandteile, insbesondere den Anschluss-Zwischenträger 40, das Elektronikgehäuse 8, die Steuerelektronik 10 und die Entstör-Baugruppe 75, und zwar jeweils in der beschriebenen, bevorzugten Ausgestaltung.

Variationen und Modifikationen und möglich im Rahmen der angehängten Ansprüchen.

## Patentansprüche

1. Elektro-Außenläufermotor (1) mit einem im Wesentlichen gekapselten Motorgehäuse (2) hoher IP-Schutzart insbesondere nach DIN/IEC EN 60034-5, mit einem Stator (4) mit einer Verschaltungseinrichtung (28) für Statorwicklungen, mit einem den Stator (4) von einer Seite her als Teil des Motorgehäuses (2) topfartig umschließenden Außenläufer (6), mit einem sich auf der dem Außenläufer (6) axial gegenüberliegenden Seite des Stators (4) als weiterer Teil des Motorgehäuses (2) anschließenden Elektronikgehäuse (8) mit einer darin angeordneten Steuerelektronik (10), sowie mit einer im Bereich des Elektronikgehäuses (8) angeordneten Anschlusseinrichtung (32) für äußere Anschlussleitungen,
**dadurch gekennzeichnet, dass** alle elektrischen Verbindungen zwischen der Anschlusseinrichtung (32) und der Steuerelektronik (10) als Steckverbindungen (34) ausgebildet sind, wobei diese Steckverbindungen (34) eine Wandung (36) des Elektronikgehäuses (8) abgedichtet durchgreifen, wobei die Anschlusseinrichtung (32) einen Zwischenträger (40) aufweist, der Anschlusskontakte für die äußeren Anschlussleitungen sowie Kontaktelemente der Steckverbindungen (34) zur Steuerelektronik (10) hin trägt, wobei der Zwischenträger (40) im Bereich von Kontakt-Durchführöffnungen der Wandung (36) des Elektronikgehäuses (8) Dichtungen (42) zur dichtenden Anlage an der Wandung (36) in die burchführöffnungen umschließenden Bereichen aufweist, und wobei der Zwischenträger (40) kastenförmig mit einer die Kontaktelemente und die Dichtungen (42) aufweisenden Unterseite (44) und einer gegenüberliegenden Öffnung (46) mit einem umlaufende Öffnungsrand (48) ausgebildet und von außen her in eine angepasste Aufnahme (50) des Elektronikgehäuses (8) eingesetzt ist.

2. Elektro-Außenläufermotor nach Anspruch 1,
**dadurch gekennzeichnet, dass** auch alle elektrischen Verbindungen zwischen der Steuerelektronik (10) und der Stator-Verschaltungseinrichtung (28) als Steckverbindungen (34) ausgebildet sind.

3. Elektro-Außenläufermotor nach Anspruch 1 oder 2,
**dadurch gekennzeichnet, dass** die Steckverbindungen (34) bezüglich ihrer Steck- und Löserichtung entsprechend einer Motorachse (22) bzw. dazu achsparallel ausgerichtet sind.

4. Elektro-Außenläufermotor nach Anspruch 2 oder 3,
**dadurch gekennzeichnet, dass** die Steckverbindungen (34) zwischen der Steuerelektronik (10) und der Stator-Verschaltungseinrichtung (28) eine Trennwand (38) eines Statorflansches (16) abgedichtet durchgreifen.

5. Elektro-Außenläufermotor nach einem der Ansprüche 1 bis 4,
**dadurch gekennzeichnet, dass** die Aufnahme (50) des Elektronikgehäuses (8) mit einem äußeren Deckel (52) verschlossen oder verschließbar ist, wobei vorzugsweise der kastenförmige Zwischenträger (40) mit seinem nach außen umgewinkelten Öffnungsrand (48) einen die Aufnahme (50) umschließenden Dichtsteg (54) des Elektronikgehäuses (8) übergreift und im Bereich des Öffnungsrandes (48) eine umlaufende Dichtung (56) derart aufweist, dass der Deckel (52) einerseits den Zwischenträger (40) und andererseits auch die Aufnahme (50) des Elektronikgehäuses (8) nach außen dicht verschließt.

6. Elektro-Außenläufermotor nach einem der Ansprüche 1 bis 5,
**dadurch gekennzeichnet, dass** der Zwischenträger (40) aus einem elektrisch isolierenden Kunststoff besteht und insbesondere als Mehrkomponenten-Formteil ausgebildet ist, wobei die Dichtungen (42, 56) aus einem elastischen Material stoffschlüssig angeformt sind.

7. Elektro-Außenläufermotor nach einem der Ansprüche 1 bis 6,
**dadurch gekennzeichnet, dass** der kastenförmige Zwischenträger (40) in einer Seitenwand (60) mindestens eine, bevorzugt mehrere Öffnungen (62) für die Anschlussleitungen aufweist.

8. Elektro-Außenläufermotor nach Anspruch 7,
**dadurch gekennzeichnet, dass** die/jede Öffnung (62) als Gewindeloch zum Einschrauben einer Dichtverschraubung (64) ausgebildet ist, wobei das Elektronikgehäuse (8) für die/jede Öffnung (62) eine zugehörige Durchführöffnung (66) aufweist, in deren Bereich die Dichtverschraubung (64) über eine Dichtung (68) nach außen abgedichtet ist.

9. Elektro-Außenläufermotor nach einem der Ansprüche 1 bis 8,
**dadurch gekennzeichnet, dass** die Anschlusseinrichtung (32) modulare, optional montierbare Anschlussmodule (70, 72, 74) aufweist.

10. Elektro-Außenläufermotor nach einem der Ansprüche 1 bis 9,
**dadurch gekennzeichnet, dass** zwischen der Anschlusseinrichtung (32) und der Steuerelektronik (10) eine separate Entstör-Baugruppe (75) beidseitig über Steckverbindungen (34) angeschlossen ist.

11. Elektro-Außenläufermotor nach einem der Ansprüche 2 bis 10,
**dadurch gekennzeichnet, dass** fürdieSteckverbindungen(34) zwischen der Steuerelektronik (10) und der Stator-Verschaltungseinrichtung (28) ein Adapterstecker (76) vorgesehen ist, der aus einem flanschartigen Trägerteil (78) mit darin gehalterten Kontaktelementen (80) besteht, wobei die Kontaktelemente (80) eine Öffnung (81) der Trennwand (38) des Statorflansches (16) durchgreifen und das Trägerteil (78) die Öffnung (81) überdeckend und über eine umlaufende, die Öffnung (81) umschließende Dichtung an der Trennwand (38) anliegend an der Trennwand (38) insbesondere über Schraubelemente befestigt ist.

12. Elektro-Außenläufermotor nach Anspruch 11,
**dadurch gekennzeichnet, dass** das Trägerteil (78) aus einem elektrisch isolierenden Kunststoff besteht und vorzugsweise als Mehrkomponenten-Formteil ausgebildet ist, wobei die Dichtung aus einem elastischen Material stoffschlüssig angeformt ist.

13. Elektro-Außenläufermotor nach einem der Ansprüche 1 bis 12,
**dadurch gekennzeichnet, dass** die Verschaltungseinrichtung (28) aus einer im Bereich eines stirnseitigen Wickelkopfes des Stators (4) angeordneten Schaltscheibe (30) besteht, die elektrische Steckverbindungen (34) zu der Steuerelektronik (10) trägt.

14. Elektro-Außenläufermotor nach einem der Ansprüche 1 bis 13,
**dadurch gekennzeichnet, dass** die Steuerelektronik (10) im Wesentlichen auf einer Leiterplatte (12) angeordnet ist, die in einer quer, insbesondere senkrecht zur Motorachse (22) ausgerichteten Ebene liegt.

15. Anschluss-Zwischenträger (40) für einen Elektro-Außenläufermotor (1) nach einem der Ansprüche 1 bis 14,
**gekennzeichnet durch** die den Zwischenträger (40) betreffenden Merkmale mindestens eines der Ansprüche 1 bis 9.

16. Elektronikgehäuse (8) für einen Elektro-Außenläufermotor (1) nach einem der Ansprüche 1 bis 14, **gekennzeichnet durch** die das Elektronikgehäuse (8) betreffenden Merkmale mindestens eines der Ansprüche 1 bis 14.

17. Steuerelektronik (10) für einen Elektro-Außenläufermotor (1) nach einem der Ansprüche 1 bis 14,
**gekennzeichnet durch** elektrische Steckverbindungen (34) zum Verbinden mit einer Anschlusseinrichtung (32) und bevorzugt mit einer Stator-Verschaltungseinrichtung (28).

18. Entstör-Baugruppe (75) für einen Elektro-Außenläufermotor (1) nach einem der Ansprüche 1 bis 14,
**gekennzeichnet durch** elektrische Steckverbindungen (34) zum Verbinden einerseits mit einer Anschlusseinrichtung (32) und andererseits mit einer Steuerelektronik (10).

## Claims

1. An electrical external rotor motor (1) with a substantially encapsulated motor housing (2) with a high degree of IP rating, in particular in accordance with DIN / IEC EN 60034-5, with a stator (4) with a wiring device (28) for stator windings, with an external rotor (6) surrounding the stator (4) from one side in the manner of a cup as part of the motor housing (2), with an electronics housing (8) attached as a further part of the motor housing (2) on the side of the stator (4) axially opposite the external rotor (6) and having control electronics (10) arranged in it, as well as with a terminal device (32) arranged in the region of the electronics housing (8) for external terminal lines, **characterized in that** all the electrical connexions between the terminal device (32) and the control electronics (10) are designed in the form of plug-in sockets (34), wherein the said plug-in sockets (34) engage through a wall (36) of the electronics housing (8) in a sealed manner, wherein the terminal device (32) has an intermediate carrier (40) which carries terminal contacts for the external terminal lines and contact elements of the plug-in sockets (34) to the control electronics (10), wherein in the region of contact lead-through openings in the wall (36) of the electronics housing (8) the intermediate carrier (40) has seals (42) for abutment in a sealed manner against the wall (36) in regions surrounding the lead-through openings, and wherein the intermediate carrier (40) is designed in the form of a box with an underside (44) comprising the contact elements and the seals (42) and an opposite opening (46) with a continuous opening edge (48) and is inserted from the outside into an adapted receiving means (50) of the electronics housing (8).

2. An electrical external rotor motor according to Claim 1, **characterized in that** all the electrical connexions between the control electronics (10) and the stator-wiring device (28) are also designed in the form of plug-in sockets (34).

3. An electrical external rotor motor according to Claim 1 or 2, **characterized in that** the plug-in sockets (34) are orientated with respect to their plug-in or release direction so as to correspond to an axis (22) of the motor or axially parallel thereto.

4. An electrical external rotor motor according to Claim 2 or 3, **characterized in that** the plug-in sockets (34) pass through a partition wall (38) of a stator flange (16) in a sealed manner between the control electronics (10) and the stator-wiring device (28).

5. An electrical external rotor motor according to any one of Claims 1 to 4, **characterized in that** the receiving means (50) of the electronics housing (8) is closed or is capable of being closed with an outer lid (52), wherein the intermediate carrier (40) in the form of a box preferably engages - with its opening edge (48) angled over towards the outside - over a sealing web (54) of the electronics housing (8) surrounding the receiving means (50) and it has a continuous seal (56) in the region of the opening edge (48) in such a way that the lid (52) closes the intermediate carrier (40) on the one hand and the receiving means (50) of the electronics housing (8) towards the outside on the other hand in a sealed manner.

6. An electrical external rotor motor according to any one of Claims 1 to 5, **characterized in that** the intermediate carrier (40) comprises an electrically insulating plastics material and, in particular, is designed in the form of a multiple-component moulded part, wherein the seals (42, 56) are moulded on in an integral manner from a resilient material.

7. An electrical external rotor motor according to any one of Claims 1 to 6, **characterized in that** in a lateral wall (60) the intermediate carrier (40) in the form of a box has at least one opening (62), and preferably a plurality of openings (62), for the terminal lines.

8. An electrical external rotor motor according to Claim 7, **characterized in that** the or each opening (62) is designed in the form of a threaded hole for screwing in a sealing screw joint (64), wherein the electronics housing (8) has an associated lead-through opening (66), in the region of which the sealing screw joint (64) is sealed off from the outside by way of a seal (68), for the or each opening (62).

9. An electrical external rotor motor according to any one of Claims 1 to 8, **characterized in that** the terminal device (32) has modular terminal modules (70, 72, 74) which are optionally capable of being mounted.

10. An electrical external rotor motor according to any one of Claims 1 to 9, **characterized in that** between the terminal device (32) and the control electronics (10) a separate suppressor assembly (75) is attached on both sides by way of plug-in sockets (34).

11. An electrical external rotor motor according to any one of Claims 2 to 10, **characterized in that** an adapter plug (76), which comprises a flange-like carrier part (78) with contact elements (80) held in it, is provided for the plug-in sockets (34) between the control electronics (10) and the stator-wiring device (28), wherein the contact elements (80) engage through an opening (81) in the partition wall (38) of the stator flange (16) and the carrier part (78) is fastened to the partition wall (38), in particular by way of screw elements, in a manner covering the opening (81) and resting against the partition wall (38) by way of a continuous seal which surrounds the opening (81).

12. An electrical external rotor motor according to Claim 11, **characterized in that** the carrier part (78) comprises an electrically insulating plastics material and is preferably constructed in the form of a multiple-component moulded part, wherein the seal is moulded on in an integral manner from a resilient material.

13. An electrical external rotor motor according to any one of Claims 1 to 12, **characterized in that** the wiring device (28) comprises a switch wafer (30) which is arranged in the region of a winding head on the end of the stator (4) and which carries electrical plug-in sockets (34) to the control electronics (10).

14. An electrical external rotor motor according to any one of Claims 1 to 13, **characterized in that** the control electronics (10) is arranged substantially on a printed-circuit board (12) which is situated in a plane orientated transversely, and in particular at a right angle, to the axis (22) of the motor.

15. An intermediate terminal carrier (40) for an electrical external rotor motor (1) according to any one of Claims 1 to 14, **characterized by** the features, relating to the intermediate carrier (40), of at least one of Claims 1 to 9.

16. An electronics housing (8) for an electrical external rotor motor (1) according to any one of Claims 1 to 14, **characterized by** the features, relating to the electronics housing (8), of at least one of Claims 1 to 14.

17. Control electronics (10) for an electrical external rotor motor (1) according to any one of Claims 1 to 14, **characterized by** electrical plug-in sockets (34) for connecting to a terminal device (32) and preferably to a stator-wiring device (28).

18. A suppressor assembly (75) for an electrical external rotor motor (1) according to any one of Claims 1 to 14, **characterized by** electrical plug-in sockets (34) for connecting to a terminal device (32) on one side and to control electronics (10) on the other side.

## Revendications

1. Moteur électrique (1) à induit extérieur, avec un boîtier de moteur (2) essentiellement blindé ayant un degré de protection IP élevé, notamment selon la norme DIN/CEI EN 60034-5, avec un stator (4) pourvu d'un dispositif de branchement (28) pour des bobinages de stator, avec un induit extérieur (6) entourant en forme de pot le stator (4) par un côté en tant que partie du boîtier de moteur (2), avec un boîtier électronique (8), dans lequel est disposée une électronique de commande (10) et qui, en tant qu'autre partie du boîtier de moteur (2), se raccorde sur le côté du stator (4) qui est axialement opposé à l'induit extérieur (6), et avec un dispositif de connexion (32) pour des lignes de connexion externes, disposé dans la région du boîtier électronique (8),
**caractérisé en ce que** toutes les liaisons électriques entre le dispositif de connexion (32) et l'électronique de commande (10) sont réalisées sous forme de fiches de connexion (34), ces fiches de connexion (34) traversant en étanchéité une paroi (36) du boîtier électronique (8), le dispositif de connexion (32) présentant un support intermédiaire (40) qui porte des contacts de connexion pour les lignes de connexion externes ainsi que des éléments de contact des fiches de connexion (34) menant à l'électronique de commande (10), le support intermédiaire (40) présentant, dans la région des ouvertures de passage de contact de la paroi (36) du boîtier électronique (8), des joints d'étanchéité (42) pour l'application étanche contre la paroi (36) dans des régions entourant les ouvertures de passage, et le support intermédiaire (40) étant réalisé en forme de caisson avec une face inférieure (44) présentant les éléments de contact et les joints d'étanchéité (42) et avec une ouverture opposée (46) pourvue d'un bord d'ouverture entourant (48), et étant inséré de l'extérieur dans un logement adapté (50) du boîtier électronique (8).

2. Moteur électrique à induit extérieur selon la revendication 1, **caractérisé en ce que** toutes les liaisons électriques entre l'électronique de commande (10) et le dispositif de branchement (28) du stator sont également réalisées sous forme de fiches de connexion (34).

3. Moteur électrique à induit extérieur selon la revendication 1 ou 2, **caractérisé en ce que** les fiches de connexion (34) sont disposées, en ce qui concerne leur direction d'enfichage et d'enlèvement, suivant un axe (22) du moteur ou en parallélisme axial avec cet axe.

4. Moteur électrique à induit extérieur selon la revendication 2 ou 3, **caractérisé en ce que** les fiches de connexion (34) entre l'électronique de commande (10) et le dispositif de branchement (28) du stator traversent en étanchéité une paroi séparatrice (38) d'une collerette de stator (16).

5. Moteur électrique à induit extérieur selon l'une des revendications 1 à 4, **caractérisé en ce que** le logement (50) du boîtier électronique (8) est ou peut être fermé par un couvercle extérieur (52), de préférence, le support intermédiaire (40) en forme de caisson engageant en recouvrement, par son bord d'ouverture (48) recourbé vers l'extérieur, une nervure d'étanchéité (54) du boîtier électronique (8) qui entoure le logement (50), et présentant, dans la région du bord d'ouverture (48), un joint d'étanchéité entourant (56) de telle sorte que le couvercle (52) ferme en étanchéité vis-à-vis de l'extérieur d'une part le support intermédiaire (40) et d'autre part également le logement (50) du boîtier électronique (8).

6. Moteur électrique à induit extérieur selon l'une des revendications 1 à 5, **caractérisé en ce que** le support intermédiaire (40) est constitué d'une matière plastique électriquement isolante et est notamment réalisé sous forme de pièce moulée à plusieurs composants, les joints d'étanchéité (42, 56) constitués d'un matériau élastique étant rapportés par liaison de matière.

7. Moteur électrique à induit extérieur selon l'une des revendications 1 à 6, **caractérisé en ce que** le support intermédiaire (40) en forme de caisson présente, dans une paroi latérale (60), au moins une et de préférence plusieurs ouvertures (62) pour les lignes de connexion.

8. Moteur électrique à induit extérieur selon la revendication 7, **caractérisé en ce que** la ou chaque ouverture (62) est réalisée sous forme de trou fileté pour y visser un raccord vissé étanche (64), le boîtier électronique (8) présentant pour la ou chaque ouverture (62) une ouverture de passage associée (66), dans la région de laquelle le raccord vissé (64) est étanche vis-à-vis de l'extérieur au moyen d'un joint d'étanchéité (68).

9. Moteur électrique à induit extérieur selon l'une des revendications 1 à 8, **caractérisé en ce que** le dispositif de connexion (32) présente des modules de connexion (70, 72, 74) modulaires, pouvant être montés optionnellement.

10. Moteur électrique à induit extérieur selon l'une des revendications 1 à 9, **caractérisé en ce qu'**un module séparé de déparasitage (75) est raccordé de part et d'autre via des fiches de connexion (34) entre le dispositif de connexion (32) et l'électronique de commande (10).

11. Moteur électrique à induit extérieur selon l'une des revendications 2 à 10, **caractérisé en ce qu'**un adaptateur à fiches (76) est prévu pour les fiches de connexion (34) entre l'électronique de commande (10) et le dispositif de branchement (28) du stator, adaptateur qui est constitué d'une partie porteuse (78) du genre bride dans laquelle sont maintenus des éléments de contact (80), les éléments de contact (80) traversant une ouverture (81) de la paroi séparatrice (38) de la collerette de stator (16) et la partie porteuse (78) étant fixée sur la paroi séparatrice (38), notamment au moyen d'éléments vissés, en recouvrant l'ouverture (81) et en s'appliquant contre la paroi séparatrice (38) par l'intermédiaire d'un joint d'étanchéité entourant l'ouverture (81).

12. Moteur électrique à induit extérieur selon la revendication 11, **caractérisé en ce que** la partie porteuse (78) est constituée d'une matière plastique électriquement isolante et est notamment réalisée sous forme de pièce moulée à plusieurs composants, le joint d'étanchéité, constitué d'un matériau élastique, étant rapporté par liaison de matière.

13. Moteur électrique à induit extérieur selon l'une des revendications 1 à 12, **caractérisé en ce que** le dispositif de branchement (28) est constitué d'un disque de commutation (30) disposé dans la région d'une tête de bobine sur un côté frontal du stator (4), disque qui porte les fiches de connexion électrique (34) menant à l'électronique de commande (10).

14. Moteur électrique à induit extérieur selon l'une des revendications 1 à 13, **caractérisé en ce que** l'électronique de commande (10) est disposée pour l'essentiel sur une carte imprimée (12) qui se situe dans un plan orienté transversalement et notamment perpendiculairement à l'axe (22) du moteur.

15. Support intermédiaire de connexion (40) pour un moteur électrique (1) à induit extérieur selon l'une des revendications 1 à 14, **caractérisé par** les caractéristiques d'au moins une des revendications 1 à 9 qui concernent le support intermédiaire (40).

16. Boîtier électronique (8) pour un moteur électrique (1) à induit extérieur selon l'une des revendications 1 à 14, **caractérisé par** les caractéristiques d'au moins une des revendications 1 à 14 qui concernent le boîtier électronique (8).

17. Électronique de commande (10) pour un moteur électrique (1) à induit extérieur selon l'une des revendications 1 à 14, **caractérisée par** des fiches de connexion électrique (34) pour la liaison avec un dispositif de connexion (32) et, de préférence, avec un dispositif de branchement (28) de stator.

18. Module de déparasitage (75) pour un moteur électrique (1) à induit extérieur selon l'une des revendications 1 à 14, **caractérisé par** des fiches de connexion électrique (34) pour la liaison d'une part avec un dispositif de connexion (32) et d'autre part avec une électronique de commande (10).
